## Europäisches Patentamt

## European Patent Office

## Office européen des brevets

(11) Veröffentlichungsnummer: **0 107 129**
**B1**

(12) **EUROPÄISCHE PATENTSCHRIFT**

---

(45) Veröffentlichungstag der Patentschrift:
**19.02.86**

(21) Anmeldenummer: **83110026.8**

(22) Anmeldetag: **07.10.83**

(51) Int. Cl.⁴: **C 08 G  77/08**, C 08 G  77/06, C 08 L  83/06

---

(54) Verfahren zur Kondensation von Polydiorganosiloxandiolen oder deren partiellen Trimethysilyl-Derivaten.

---

(30) Priorität: **21.10.82  DE 3238934**

(43) Veröffentlichungstag der Anmeldung:
**02.05.84 Patentblatt 84/18**

(45) Bekanntmachung des Hinweises auf die Patenterteilung:
**19.02.86 Patentblatt 86/8**

(84) Benannte Vertragsstaaten:
**BE DE FR GB IT NL**

(56) Entgegenhaltungen:
**AT - B - 174 734**
**DE - A - 2 511 344**
**FR - A - 955 711**
**FR - A - 2 275 513**
**US - A - 3 033 807**

(73) Patentinhaber: **Th. Goldschmidt AG,
Goldschmidtstrasse 100 Postfach 101461,
D-4300 Essen 1 (DE)**

(72) Erfinder: **Dietrich, Heinz, Dr., Branichstrasse 63,
D-6905 Schriesheim (DE)**
Erfinder: **Koerner, Götz, Dr., Kantorie 126, D-4300 Essen
(DE)**
Erfinder: **Patzke, Hans-Jürgen, Middelicherstrasse 260,
D-4650 Gelsenkirchen-Resse (DE)**
Erfinder: **Spieker, Fritz, Kirchhofsallee 28,
D-4300 Essen-Werden (DE)**

---

ACTORUM AG

# Beschreibung

Die Erfindung betrifft ein Verfahren zur Kondensation von Polydiorganosiloxandiolen oder deren partiellen Trimethylsilyl-Derivaten unter katalytischer Abspaltung von Wasser.

Unter Polydiorganosiloxandiolen oder deren partiellen Trimethylsilyl-Derivaten sind hier Ausgangsprodukte für die Herstellung von Basispolymeren für Siliconkautschuke oder Siliconöle zu verstehen. Die Kondensation von Polydiorganosiloxandiolen ergibt höhermolekulare Polydiorganosiloxandiole, die vor allem als Basispolymere für Siliconkautschuke dienen. Verwendet man als Ausgangsprodukt ein partiell trimethylsilyliertes Polydiorganosiloxanol, so kann man daraus ein vollständig durch Trimethylsilylgruppen endgestopptes Siliconöl herstellen, wenn man bei der Kondensation alle SiOH-Gruppen erfasst.

Polydiorganosiloxandiole höheren Molekulargewichtes und entsprechend höherer Viskosität, z.B. von Viskositäten über 1000, insbesondere aber über 10000 mm$^2 \cdot$s$^{-1}$ sind wertvolle Rohstoffe für die Herstellung von Siliconelastomeren. Solche, auch als Basispolymere zu bezeichnenden Kautschukrohstoffe, lassen sich nach dem Stand der Technik entweder durch ringöffnende Polymerisation von zyklischen Polydiorganosiloxanen oder durch Kondensation von linearen, niedermolekularen Polydiorganosiloxandiolen unter Abspaltung von Wasser herstellen.

Die ringöffnende Polymerisation zyklischer Siloxane hat den Nachteil, dass sie nur bis zu einem Gleichgewichtszustand abläuft und man aus dem hochviskosen Reaktionsprodukt die Zyklen, die in ihrer Menge mindestens dem Gleichgewichtsgehalt entsprechen, entfernen muss. Es ist verfahrenstechnisch vorteilhaft, diese Zyklen bereits den bei der Hydrolyse von Diorganodihalogensilanen anfallenden niederviskosen Polydiorganosiloxandiolen durch Destillation zu entziehen.

Die Kondensation der linearen, niedermolekularen, von zyklischen Polysiloxanen freien Polydiorganosiloxandiole zu höhermolekularen Basispolymeren erfolgt nach dem Stand der Technik unter Zusatz bestimmter Katalysatoren. Diese Katalysatoren sollen dabei lediglich die Reaktion zweier SiOH-Gruppen zu einer SiOSi-Gruppe beschleunigen. Diese Katalysatoren sollen aber nicht äquiliebrierend wirken, z.B. im Sinne einer Spaltung von SiOSi-Bindungen, denn dabei würden sich in unerwünschter Weise erneut zyklische Siloxane bilden. So ist aus der DE-PS Nr. 930481 und der DE-AS Nr. 2229514 bekannt, als Katalysator Phosphornitrilchlorid zu verwenden. Da das Phosphornitrilchlorid sich jedoch nicht aus dem Reaktionsprodukt entfernen lässt, wird gemäss einer Weiterentwicklung des obengenannten Standes der Technik in der DE-AS Nr. 1262020 vorgeschlagen, zur Inhibierung des Phosornitrilchlorids nach erfolgter Kondensationsreaktion Amine zuzusetzen.

Die Anwesenheit der Katalysatoren in den mit ihrer Hilfe hergestellten Produkten kann nun zu unerwünschten Erscheinungen führen. So kann z.B. die Viskosität durch weitere Kondensation zu stark ansteigen oder sogar wieder die Rückbildung zyklischer Organosiloxane gefördert werden. Ausserdem können die Katalysatorenrückstände das äussere Erscheinungsbild des Organosiloxans trüben.

Aufgabe der vorliegenden Erfindung ist es, ein Verfahren zu finden, bei dem der Kondensationskatalysator am Ende der Reaktion desaktiviert ist. Eine weitere Aufgabe des erfindungsgemässen Verfahrens besteht darin, eine Kondensationsreaktion zu finden, die bei möglichst niedrigen Temperaturen bereits mit relativ hoher Geschwindigkeit zu Produkten reproduzierbarer Viskosität führt.

Diese Aufgabe wird dadurch gelöst, dass man als Katalysator Aluminiumacetat oder Aluminiumhydroxyacetat und Oxalsäure in kleinsten Mengen einsetzt, wobei diese beiden Komponenten in ganz bestimmter Weise dem Kondensationsprodukt zuzusetzen sind. Das Verfahren ist dadurch gekennzeichnet, dass man zunächst dem Polydiorganosiloxandiol oder dessen partiellem Trimethylsilyl-Derivat feinteiliges Aluminiumacetat oder Aluminiumhydroxyacetat in Mengen von 1 bis 10 ppm zusetzt, das Gemisch unter gleichzeitigem Einleiten von Inertgasen und gleichzeitiger Anwendung von Vakuum bei Temperaturen von 105 bis 160° C mindestens 10 Minuten belässt, danach 1 bis 50 ppm Oxalsäure auf einmal oder in mehreren Teilportionen zusetzt und die angegebenen Reaktionsbedingungen bis zum Erreichen des gewünschten Kondensationsgrades aufrechterhält oder die Reaktionstemperatur auf bis zu 240° C steigert. Das Aluminumacetat oder Aluminiumhydroxyacetat hat vorzugsweise eine mittlere Teilchengrösse von 1 bis 20 μm.

Nur unter Einhaltung dieser Verfahrensbedingungen und des Zusatzes der beiden Katalsatorkomponenten in der angegebenen Reihenfolge verläuft die Kondensation der eingesetzten Polydiorganosiloxandiole in der gewünschten Weise, und es werden die geforderten Viskositäten dieser hochmolekularen Produkte erreicht. Dabei läuft die Reaktion zügig ab, wobei aufgrund der verhältnismässig niedrigen Temperatur die Energiezufuhr im angemessenen Bereich bleibt.

Den niederviskosen bzw. niedermolekularen Polydiorganosiloxandiolen oder deren partiellen Trimethylsilyl-Derivaten wird zunächst das feinteilige Aluminiumacetat oder Aluminiumhydroxyacetat zugesetzt. Gleichzeitig wird das Gemisch auf Temperaturen von 105 bis 160° C gebracht und Inertgas eingeleitet. Man kann dabei zweckmässigerweise auch Vakuum anlegen. Dadurch wird die Entfernung von Wasser, welches noch im Ausgangsprodukt vorhanden ist, begünstigt. Vorteilhaft ist es deshalb, das Einleiten von Inertgas in grösstmöglicher Verteilung vorzunehmen, damit die Grenzfläche Gas:flüssiger Phase möglichst gross ist. In bekannter Weise erreicht man dieses durch Einsatz von Einleitungssystemen, bei denen das Inertgas mit Hilfe von Verdünnungsvorrichtungen eingebracht wird.

Dieses Ausgangsorganosiloxanol, in dem sich bereits als Katalysatorkomponente das feinteilige Aluminiumacetat oder Aluminiumhydroxyacetat befindet, wird nun eine genügend lange Zeit, mindestens aber 10 Minuten, bei Temperaturen zwischen 105 und 160° C belassen. Jetzt erst wird die Oxalsäure als Zweitkatalysatorkomponente zugesetzt und die angegebenen Reaktionsbedingungen solange aufrechterhalten, bis die geforderte Viskosität des Kondensationsproduktes erreicht ist.

Es war überraschend, dass weder das Aluminiumacetat bzw. Aluminiumhydroxyacetat noch die Oxalsäure allein im genannten Temperaturbereich katalystisch wirksam ist. Auch bei umgekehrter Reihenfolge des Zusatzes der beiden Katalysatorkomponenten, nämlich zuerst Oxalsäure, dann Aluminiumacetat oder Aluminiumhydroxyacetat im angegebenen Temperaturbereich, tritt keine katalytische Wirkung ein. Es war auch nicht vorsehbar, dass nach dem Zusatz des Aluminiumacetats oder Aluminiumhydroxyacetates eine bestimmte Zeit gewartet werden muss, eher als nächstes die Oxalsäure zugesetzt werden darf. Man kann vermuten, dass in der ersten Phase, nämlich nach dem Zusatz von Aluminiumacetat oder Aluminiumhydroxyacetat und einer Verweilzeit von mindestens 10 Minuten, bei Temperaturen von 105 bis 160° C unter gleichzeitigem Einleiten von Inertgas und Anwendung von Vakuum, lediglich im Ausgangsprodukt vorhandenes Wasser bis zu einer Untergrenze entfernt wird. Auch bei gleichzeitigem Zusatz von Aluminiumacetat oder Aluminiumhydroxyacetat und Oxalsäure direkt zu Anfang findet keine Kondensationsreaktion in der gewünschten Weise statt. Viskositätsmessungen haben gezeigt, dass beim erfindungsgemässen Verfahrensablauf vor dem Oxalsäurezusatz noch keine Kondensationsreaktion stattgefunden hat.

Als Ausgangsprodukte lassen sich besonders Polydiorganosiloxandiole oder deren partielle Trimethylsilyl-Derivate verwenden, deren Organoreste Alkylreste mit 1 bis 18 C-Atomen und/oder Phenyl- und/oder Vinyl- und/oder Trifluorpropylreste sind.

Vorzugsweise jedoch verwendet man solche Polydiorganosiloxandiole oder deren partielle Trimethylsilyl-Derivate, deren Organoreste vollständig oder zum grössten Teil aus Methylgruppen bestehen. Die Polydiorganosiloxandiole lassen sich in bekannter Weise durch Hydrolyse der entsprechenden Diorganodichlorsilane gewinnen. Dabei werden dem entstandenen Hydrolysat die zyklischen Polysiloxane destillativ entzogen. Geeignete Diorganodihalogensilane sind z.B.: Dimethyldichlorsilan, Diphenyldichlorsilan, Phenylmethyldichlorsilan, Vinylmethyldichlorsilan, wobei Alkyl einen Rest mit 2 bis 18 C-Atomen bedeutet, sowie Trifluorpropylmethyldichlorsilan.

Partiell trimethylsilylierte Polydiorganosiloxanole kann man dadurch herstellen, dass man Diorganodihalogensilane unter Zusatz bestimmter Mengen Trimethylchlorsilan hydrolysiert. Vorzugsweise lassen sich diese partiell trimethylsilylierten Polydiorganosiloxanole jedoch aus Polydiorganosiloxandiolen und Trimethylsilylierungsmitteln, wie Trimethylchlorsilan oder Gemischen von Trimethylchlorsilan und Säureakzeptoren, wie tertiären Amine, Hexamethyldisilazan oder Gemischen aus Trimethylchlorsilan und Hexamethyldisilazan, herstellen.

Die Oxalsäure sollte dem Reaktionsgemisch in möglichst feinteiliger Form zugesetzt werden, wobei es von Vorteil ist, die Oxalsäure in gelöster Form zu verwenden. Dabei hat sich insbesondere eine Lösung von Oxalsäuredihydrat in Diethylenglykoldimethylether bewährt. Während des Verfahrensablaufes bzw. bei der Untersuchung des Endproduktes wurde festgestellt, dass sich die Oxalsäure bei der Kondensationsreaktion aus dem Verfahrensprodukt entfernt hat. Die katalytische Wirkung wurde jedoch dadurch überraschenderweise nicht beeinträchtigt.

Die Katalysatorkomponente Aluminiumhydroxyacetat bzw. Aluminiumacetat, welche zweckmässigerweise wasserfrei sein sollte, wird in möglichst feinteiliger Form zugesetzt, wobei je nach Reaktivität des eingesetzten Organosiloxandiols möglichst wenig Aluminiumhydroxyacetat bzw. Aluminiumacetat zugesetzt wird. Das Aluminiumhydroxyacetat bzw. Aluminiumacetat sollte vorzugsweise eine mittlere Teilchengrösse von 1 bis 20 μm aufweisen. Bevorzugt verwendet man Aluminiumhydroxydiacetat. Dabei sollen 10 ppm eine Obergrenze darstellen. Diese sehr geringen Mengen an Aluminiumhydroxyacetat bzw. Aluminiumacetat stören im Endprodukt weder optisch noch anwendungstechnisch noch vermindern sie die thermische Stabilität der hergestellten Polymere.

Bei der Kondensation von Polydiorganosiloxandiolen soll je nach gewünschter Reaktionsgeschwindigkeit bei Temperaturen zwischen 105 und 160° C gearbeitet werden. Jedoch lässt sich im Temperaturbereich zwischen 120 und 130° C die Reaktionsgeschwindigkeit besonders gut und einfach kontrollieren, wobei bei einer relativ kurzen Reaktionszeit die gewünschten hochviskosen Organoxiloxandiole erhalten werden. Ist die gewünschte Viskosität erreicht, wird die unter Wasserabspaltung ablaufende Kondensationsreaktion durch Abkühlen des Reaktionsgemisches bzw. durch Unterbrechung des Inertgasstromes und Abstellen des Vakuumes abgebrochen. Die erhaltenen hochmolekularen Diorganopolysiloxane dienen der Herstellung von RTV- bzw. HTV-Kautschuk. Bei dieser Kondensationsreaktion können insbesondre Polydimethylsiloxandiole einer Viskosität von 10000 bis 200000 $mm^2 \cdot s^{-1}$ erhalten werden. Solche sogenannten Basispolymere finden besonders Einsatz zur Herstellung von einkomponentigen, unter Zutritt von Luftfeuchtigkeit härtenden Siliconkautschuken, welche bei Raumtemperatur aushärten.

Bei der Kondensation von partiell trimethylsilylierten Polydiorganosiloxandiolen werden im allgemeinen höhere Reaktionstemperaturen benötigt, da hierbei nahezu alle SiOH-Gruppen kondensieren sollen, damit Polydiorganosiloxane erhalten werden, welche endständig nahezu ausschliesslich durch Trimethylsiloxygruppen abgesättigt sind.

Anhand der folgenden Beispiele wird das erfindungsgemässe Verfahren noch näher erläutert.

*Beispiel 1*

3000 kg eines Polydimethylsiloxandioles mit einer Viskosität von 132 mm²·s⁻¹ (cSt) bei 25° C werden vorgelegt. Danach wird der Reaktorinhalt unter Rühren auf 100° C erwärmt. Sobald eine Innentemperatur von 100° C erreicht ist, wird über eine Ringbrause Stickstoff (15 m³/h) eingedüst. Gleichzeitig wird Vakuum angelegt (300-400 mbar) und die Innentemperatur innerhalb 30 Minuten auf 125° C gesteigert. Nun wird kurz belüftet, um 12 g Aluminiumhydroxydiacetat mit einer mittleren Teilchengrösse von 4 µm zuzusetzen. Anschliessend wird bei 125° C unter Vakuum (300-400 mbar) weiter unter Rühren Stickstoff (15 m³/h) eingeleitet. Nach 1 h wird erneut belüftet, um 75 g Oxalsäuredihydrat, gelöst in 300 g Diethylenglykoldimethylether, zuzusetzen. Danach wird bei 125° C unter Vakuum (300-400 mbar) unter Rühren weiter Stickstoff (15 m³/h) eingeleitet.

Nach 3stündiger Kondensationszeit, beginnend mit der Oxalsäuredihydratzugabe, ist die Kondensation des Polydimethylsiloxandioles bis zur gewünschten Viskosität abgeschlossen. Die Viskosität wird während der Kondensationsphase mit einer eingebauten Messeinrichtung ständig überwacht. Das anfallende Kondensat gelangt über einen Kühler in eine Vorlage, von der es separat abgezogen wird. Nach beendeter Kondensationsphase (3 h) wird sofort gekühlt, die Stickstoffzufuhr gesperrt und der Reaktor belüftet. Bei 90° C Innentemperatur wird das so erhaltene Polymer in die dafür vorgesehenen Gebinde (z.B. Edelstahlstapeltanks) abgelassen.

Das Produkt ist farblos, klar und hat eine Viskosität von 59000 mm²·s⁻¹ bei 25° C. Die Säurezahl des Produktes liegt bei ≪ 0,01 mg KOH/g. Wenn die Oxalsäure im Produkt verbleiben würde, müsste die Säurezahl bei 0,011 mg KOH/g liegen. Die Säurezahl liegt jedoch weit unter diesem Wert. Dass die Oxalsäure bei dem erfindungsgemässen Verfahren verschwindet, erkennt man besonders deutlich bei Ansätzen, bei denen man mit der 5- bis 10fachen Menge an Oxalsäure arbeitet. Auch hier geht die Säurezahl auf Werte ≪ 0,01 mg KOH/g zurück. Der Gehalt an flüchtigen Bestandteilen (4 h, 200° C) ist < 1 %.

*Beispiel 2*

3000 kg eines Polydimethylsiloxandioles, in dem 3 Mol-% der $CH_3$-Gruppen durch Vinylgruppen ersetzt sind, mit einer Viskosität von 193 mm²·s⁻¹ (cSt) bei 25° C werden vorgelegt. Danach wird der Reaktorinhalt unter Rühren auf 100° C erwärmt. Sobald eine Innentemperatur von 100° C erreicht ist, wird über eine Ringbrause Stickstoff (15 m³/h) eingedüst. Gleichzeitig wird Vakuum angelegt (300-400 mbar) und die Innentemperatur innerhalb 45 Minuten auf 135° C gesteigert. Nun wird kurz belüftet, um 15 g Aluminiumacetat mit einer mittleren Teilchengrösse von 4 µm zuzusetzen. Anschliessend wird bei 135° C unter Vakuum (300-400 mbar) weiter unter Rühren Stickstoff (15 m³/h) eingeleitet. Nach 1 h wird erneut belüftet, um 90 g Oxalsäuredihydrat, gelöst in 360 g Diethylenglykoldimethylether, zuzusetzen. Danach wird bei 135° C unter Vakuum (300-400 mbar) unter Rühren weiter Stickstoff (15 m³/h) eingeleitet.

Nach 4stündiger Kondensationszeit, beginnend mit der Oxalsäuredihydratzugabe, ist die Kondensation des Polymethylvinylsiloxandioles bis zur gewünschten Viskosität abgeschlossen. Nach beendeter Kondensationsphase (4 h) wird sofort gekühlt, die Stickstoffzufuhr gesperrt und der Reaktor belüftet. Bei 90° C Innentemperatur wird das so erhaltene Polymer abgefüllt.

Das Produkt ist farblos, klar und hat eine Viskosität von 56000 mm²·s⁻¹ bei 25° C. Die Säurezahl des Produktes liegt bei ≪ 0,01 mg KOH/g, der Gehalt an flüchtigen Bestandteilen (4 h, 200° C) ist < 1 %.

*Beispiel 3*

3000 kg eines Polydiphenyldimethylsiloxandioles (Copolymer, bestehend aus Diphenylsiloxan- und Dimethylsiloxan-Gruppen) mit einer Viskosität von 315 mm²·s⁻¹ (cSt) bei 25° C werden vorgelegt. Danach wird der Reaktorinhalt unter Rühren auf 100° C erwärmt. Sobald eine Innentemperatur von 100° C erreicht ist, wird über eine Ringbrause Stickstoff (15 m³/h) eingedüst. Gleichzeitig wird Vakuum angelegt (300-400 mbar) und die Innentemperatur innerhalb 60 Minuten auf 145° C gesteigert. Nun wird kurz belüftet, um 22,5 g Aluminiumhydroxydiacetat mit einer mittleren Teilchengrösse von 2 µm zuzusetzen. Anschliessend wird bei 145° C unter Vakuum (300-400 mbar) weiter unter Rühren Stickstoff (15 m³/h) eingeleitet. Nach 1 h wird erneut belüftet, um 150 g Oxalsäuredihydrat, gelöst in 600 g Diethylenglykoldimethylether, zuzusetzen. Danach wird bei 145° C unter Vakuum (300-400 mbar) unter Rühren weiter Stickstoff (15 m³/h) eingeleitet.

Nach 4½stündiger Kondensationszeit, beginnend mit der Oxalsäuredihydratzugabe, ist die Kondensation des Polydiphenyldimethylsiloxandioles bis zur gewünschten Viskosität abeschlossen. Nach beendeter Kondensationsphase (4½ h) wird sofort gekühlt, die Stickstoffzufuhr gesperrt und der Reaktor belüftet. Bei 90° C Innentemperatur wird das so erhaltene Polymer abgefüllt.

Das Produkt ist farblos, ganz schwach getrübt und hat eine Viskosität von 64000 mm²·s⁻¹ bei 25° C. Die Säurezahl des Produktes liegt bei ≪ 0,01 mg KOH/g, der Gehalt an flüchtigen Bestandteilen (4 h, 200° C) ist < 1 %.

*Beispiel 4*

a) 1000 kg eines Polydimethylsiloxandioles mit einer Viskosität von 132 mm²·s⁻¹ (cST) bei 25° C werden vorgelegt. Danach wird der Reaktorinhalt unter Rühren auf 100° C erwärmt. Sobald eine Innentemperatur von 100° C erreicht ist, wird über eine Ringbrause Stickstoff (10 m³/h) eingedüst. Gleichzeitig wird Vakuum angelegt (300-400 mbar) und die Innentemperatur innerhalb 30 Minuten auf 130° C gesteigert. Diese Bedingungen werden 30 Minuten aufrechterhalten. Anschliessend wird belüftet und das Einleiten von Stickstoff beeendet. Nun wird der Reaktorinhalt auf 50° C heruntergekühlt. Bei 50° C werden 8 kg Triethylamin unter Rühren zugegeben. Danach werden innerhalb von 45 Minuten bei 50° C unter Rühren gleichmässig 8 kg Trimethylchlorsilan zugetropft. Nun wird innerhalb 60 Minuten auf 130° C aufgeheizt und 60 Minuten bei dieser Temperatur gerührt. Jetzt wird unter schwachem Stickstoffstrom und Anlegen von Vakuum (200 mbar) während 2 h das überschüssige Triethylamin entfernt. Danach wird gekühlt, die Stickstoffzufuhr gesperrt und der Reaktor belüftet. Bei 50° C Innentemperatur wird der Reaktorinhalt über Filterscheiben aus Cellulosefasern blank filtriert. Es werden so 990 kg partiell trimethylsilyliertes Polydimethylsiloxandiol erhalten.

Das Produkt ist klar, farb- und geruchlos.

b) Diese 990 kg partiell trimethylsilyliertes Polydimethylsiloxandiol werden in einem weiteren Reaktor vorgelegt. Danach wird der Reaktorinhalt unter Rühren auf 125° C erwärmt. Bei 125° C Innentemperatur werden 5 g Aluminiumhydroxydiacetat mit einer mittleren Teilchengrösse von 4 µm zugesetzt. Anschliessend wird bei 125° C im Vakuum (300-400 mbar) unter Rühren eine Ringbrause Stickstoff (10 m³/h) eingeleitet. Der Reaktorinhalt wird weiter aufgeheizt. Nach 1 h ist eine Innentemperatur von 150° C erreicht. Nun wird belüftet, um 10 g Oxalsäuredihydrat, gelöst in 40 g Diethylenglykoldimethylether, zuzusetzen. Danach wird weiter aufgeheizt und im Vakuum (300-400 mbar) unter Rühren weiter Stickstoff (10 m³/h) eingeleitet. Die Innentemperatur wird bis auf 210° C gesteigert.

Nach 3½stündiger Kondensationszeit, beginnend mit der Oxalsäuredihydratzugabe, ist die Kondensation des partiell trimethylsilylierten Polydimethylsiloxandiols abgeschlossen. Jetzt ist kein Viskositätsanstieg mehr zu erkennen. Die Viskosität wird während der Kondensationsphase mit einer eingebauten Messeinrichtung ständig überwacht. Das anfallende Kondensat gelangt über einen Kühler in eine Vorlage, von der es separat abgezogen wird. Nach beendeter Kondensationsphase (3½ h) wird gekühlt und der Reaktor unter Stickstoffzufuhr belüftet. Bei 90° C Innentemperatur wird das so erhaltene Polydimethylsiloxan, welches endständig nur durch Trimethylsiloxygruppen abgesättigt ist, in die dafür vorgesehenen Gebinde abgelassen.

Das Produkt ist farblos, klar und hat eine Viskosität von 8040 mm²·s⁻¹ bei 25° C. Die Säurezahl des Produktes liegt bei ≪ 0,002 mg KOH/g. Der Gehalt an flüchtigen Bestandteilen (4 h, 200° C) ist < 1%.

Verrührt man dieses Produkt mit 5% Ethyltriacetoxysilan und 1% Dibutylzinndilaurat, so ist es auch nach 7 Tagen Standzeit weiterhin einwandfrei fliessfähig.

Setzt man dem Produkt jedoch 5% Polydimethylsiloxandiol einer Viskosität von 132 mm²·s⁻¹ (cSt) bei 25° C (Ausgangsprodukt von Beispiel

4 a)) hinzu und verrührt diese Mischung ebenfalls mit 5% Ethyltriacetoxysilan und 1% Dibutylzinndilaurat, so bildet sich bereits nach 3 h eine feste Masse. Auch bei geringeren Gehalten an Polydimethylsiloxandiolen führt diese Reaktion zumindestens nach längerer Zeit zur Vergelung.

*Beispiel 5*

750 kg des unter Beispiel 4 a) beschriebenen partielle trimethylsilylierten Polydimethylsiloxandiols und 250 kg eines Polydimethylsiloxandiols mit einer Viskosität von 132 mm²·s⁻¹ (cSt) bei 25° C werden vorgelegt. Danach wird der Reaktorinhalt unter Rühren auf 100° C erwärmt. Sobald eine Innentemperatur von 100° C erreicht ist, wird über eine Ringbrause Stickstoff (10 m³/h) eingedüst. Gleichzeitig wird Vakuum angelegt (300-400 mbar) und die Innentemperatur innerhalb 30 Minuten auf 125° C gesteigert. Nun wird kurz belüftet, um 5 g Aluminiumhydroxydiacetat mit einer mittleren Teilchengrösse von 4 µm zuzusetzen. Anschliessend wird weiter aufgeheizt, im Vakuum (300-400 mbar) wird unter Rühren weiter Stickstoff (10 m³/h) eingeleitet. Nach 1 h ist eine Innentemperatur von 150° C erreicht. Nun wird belüftet, um 10 g Oxalsäuredihydrat, gelöst in 40 g Diethylenglykoldimethylether, zuzusetzen. Danach wird weiter aufgeheizt und im Vakuum (300-400 mbar) unter Rühren weiter Stickstoff (10 m³/h) eingeleitet. Die Innentemperatur wird bis auf 210° C gesteigert.

Nach 3½stündiger Kondensationszeit, beginnend mit der Oxalsäuredihydratzugabe, ist die Kondensation des Gemisches aus trimethylsilyliertem Polydimethylsiloxandiol und Polydimethylsiloxandiol abgeschlossen. Jetzt ist kein Viskositätsanstieg mehr zu erkennen. Die Viskosität wird während der Kondensationsphase mit einer eingebauten Messeinrichtung ständig überwacht. Das anfallende Kondensat gelangt über einen Kühler in eine Vorlage, von der es separat abgezogen wird. Nach beendeter Kondensationsphase (3½ h) wird gekühlt und der Reaktor unter Stickstoffzufuhr belüftet. Bei 90° C Innentemperatur wird das so erhaltene Polydimethylsiloxan, welches endständig nur durch Trimethylsiloxygruppen abgesättigt ist, in die dafür vorgesehenen Gebinde abgelassen.

Das Produkt ist farblos, klar und hat eine Viskosität von 24 200 mm²·s⁻¹ bei 25° C. Die Säurezahl des Produktes liegt bei ≪ 0,002 mg KOH/g. Der Gehalt an flüchtigen Bestandteilen (4 h, 200° C) ist < 1%.

Verrührt man dieses Produkt mit 5% Ethyltriacetoxysilan und 1% Dibutylzinndilaurat, so ist es auch nach 7 Tagen Standzeit weiterhin einwandfrei fliessfähig. Der Polydiorganosiloxandiol-Gehalt ist also unter die Nachweisgrenze abgesunken. Das gleiche gilt für den SiOH-Gehalt.

**Patentansprüche**

1. Verfahren zur Kondensation von Polydiorganosiloxandiolen oder deren partiellen Trimethylsilyl-Derivaten unter katalytischer Abspaltung von Wasser, dadurch gekennzeichnet, dass man zunächst dem Polydiorganosiloxandiol oder dessen partiellem Trimethylsilyl-Derivat feinteiliges Aluminiumacetat oder Aluminiumhydroxyacetat in Mengen von 1 bis 10 ppm zusetzt, das Gemisch unter gleichzeitigem Einleiten von Inertgasen und gleichzeitiger Anwendung von Vakuum bei Temperaturen von 105 bis 160° C mindestens 10 Minuten belässt, danach 1 bis 50 ppm Oxalsäure auf einmal oder in mehreren Teilportionen zusetzt und die angegebenen Reaktionsbedingungen bis zum Erreichen des gewünschten Kondensationsgrades aufrechterhält oder die Reaktionstemperatur auf bis zu 240° C steigert.

2. Verfahren nach Anspruch 1, dadurch gekennzeichnet, dass man dem Polydiorganolsiloxandiol oder dessen partiellem Trimethylsilyl-Derivat Aluminiumacetat oder Aluminiumhydroxyacetat einer mittleren Teilchengrösse von 1 bis 20 µm zusetzt.

3. Verfahren nach Anspruch 1 oder 2, dadurch gekennzeichnet, dass man es mit Polydiorganosiloxandiolen oder deren partiellen Trimethylsilyl-Derivaten durchführt, deren Organorest Alkylreste mit 1 bis 18 C-Atomen und/oder Phenyl- und/oder Vinyl- und/oder Trifluorpropylreste sind.

4. Verfahren nach Anspruch 3, dadurch gekennzeichnet, dass der Organorest ein Methylrest ist.

5. Verfahren nach Anspruch 1, dadurch gekennzeichnet, dass man die Oxalsäure in Form ihres Dihydrates zusetzt.

6. Verfahren nach Anspruch 1, dadurch gekennzeichnet, dass man die Oxalsäure in dispergierter oder gelöster Form zusetzt.

7. Verfahren nach Anspruch 6, dadurch gekennzeichnet, dass man die Oxalsäure in Form einer Lösung in Diethylenglykoldimethylether zusetzt.

**Claims**

1. Process for the condensation of polydiorganosiloxanediols or their partial trimethylsilyl derivatives, with catalytical elimination of water, characterized in that first finely divided aluminium acetate or aluminium hydroxyacetate in amounts of 1 to 10 ppm is added to the polydiorganosiloxanediol or its partial trimethylsilyl derivative, the mixture is left, with simultaneous introduction of inert gases and simultaneous application of vacuum, at temperatures of 105 to 160° C for at least 10 minutes, thereafter 1 to 50 ppm of oxalic acid are added all at once or in several part-portions, and the stated reaction conditions are maintained until the desired degree of condensation is reached, or the reaction temperature is raised to values of up to 240° C.

2. Process according to Claim 1, characterized in that aluminium acetate or aluminium hydroxyacetate having a mean particle size of 1 to 20 µm is added to the polydiorganosiloxanediol or its partial trimethylsilyl derivative.

3. Process according to Claim 1 or 2, characterized in that it is carried out with polydiorganosiloxanediols or their partial trimethylsilyl derivatives wherein the organo radicals are alkyl radicals with 1 to 18 C atoms and/or phenyl and/or vinyl and/or trifluoropropyl radicals.

4. Process according to Claim 3, characterized in that the organo radical is a methyl radical.

5. Process according to Claim 1, characterized in that the oxalic acid is added in the form of its dihydrate.

6. Process according to Claim 1, characterized in that the oxalic acid is added in a dispersed or dissolved form.

7. Process according to Claim 6, characterized in that the oxalic acid is added in the form of a solution in diethylene glycol dimethyl ether.

**Revendications**

1. Procédé pour la condensation de polydiorganosiloxanediols ou de leurs dérivés partiels triméthylsilylés, avec élimination catalytique d'eau, caractérisé en ce qu'on ajoute d'abord au polydiorganosiloxanediol ou à son dérivé partiel triméthylsilylé de l'acétate d'aluminium ou de l'hydroxyacétate d'aluminium finement divisé en des quantités de 1 à 10 ppm, qu'on abandonne le mélange, sous introduction simultanée de gaz inertes et utilisation simultanée de vide à des températures de 105 à 160° C pendant au moins 10 minutes, puis qu'on ajoute 1 à 50 ppm d'acide oxalique, en une fois ou en plusieurs portions partielles, et qu'on maintient les conditions indiquées de réaction jusqu'à obtention du degré de condensation voulu, ou bien qu'on élève la température de réaction jusqu'à 240° C.

2. Procédé selon la revendication 1, caractérisé en ce qu'on ajoute au polydiorganosiloxanediol ou à son dérivé partiel triméthylsilylé de l'acétate d'aluminium ou de l'hydroxyacétate d'aluminium ayant une granulométrie moyenne de 1 à 20 µm.

3. Procédé selon la revendication 1 ou 2, caractérisé en ce qu'il est exécuté avec des polydiorganosiloxanediols ou leurs dérivés partiels triméthylsilylés, dont les radicaux organiques sont des radicaux alkyle ayant 1 à 18 atomes de carbone et/ou des radicaux phényle et/ou vinyle et/ou trifluoro.

4. Procédé selon la revendication 3, caractérisé en ce que le radical organique est un radical méthyle.

5. Procédé selon la revendication 1, caractérisé en ce qu'on ajoute l'acide oxalique sous la forme de son dihydrate.

6. Procédé selon la revendication 1, caractérisé en ce qu'on ajoute l'acide oxalique sous forme dispersée ou dissoute.

7. Procédé selon la revendication 6, caractérisé en ce qu'on ajoute l'acide oxalique sous la forme d'une solution dans l'éther diméthylique du diéthylèneglycol.